Europäisches Patentamt

(19) European Patent Office

Office européen des brevets

(11) Numéro de publication: **0 143 497**
**B1**

(12) **FASCICULE DE BREVET EUROPEEN**

(45) Date de publication du fascicule du brevet: **11.07.90**

(51) Int. Cl.⁵: **G 01 S 13/44,** G 01 S 7/40

(21) Numéro de dépôt: **84201686.7**

(22) Date de dépôt: **20.11.84**

(54) **Système radar à monoimpulsion à onde continue modulée en fréquence dont on améliore la stabilité d'axe.**

(30) Priorité: **23.11.83 FR 8318656**

(43) Date de publication de la demande:
**05.06.85 Bulletin 85/23**

(45) Mention de la délivrance du brevet:
**11.07.90 Bulletin 90/28**

(84) Etats contractants désignés:
**DE FR GB NL SE**

(56) Documents cités:
**FR-A-2 027 728**
**FR-A-2 041 178**
**FR-A-2 158 080**
**FR-A-2 466 751**
**US-A-3 883 870**

(73) Titulaire: **TELECOMMUNICATIONS RADIOELECTRIQUES ET TELEPHONIQUES T.R.T.**
**88, rue Brillat Savarin**
**F-75013 Paris (FR)**
㊴ **FR**

(73) Titulaire: **N.V. Philips' Gloeilampenfabrieken**
**Groenewoudseweg 1**
**NL-5621 BA Eindhoven (NL)**
㊴ **DE GB NL SE**

(72) Inventeur: **Allezard, Roland**
**SOCIETE CIVILE S.P.I.D. 209 rue de l'Université**
**F-75007 Paris (FR)**
Inventeur: **Degouy, Jean-Luc**
**SOCIETE CIVILE S.P.I.D. 209 rue de l'Université**
**F-75007 Paris (FR)**

(74) Mandataire: **Pyronnet, Jacques et al**
**Société Civile S.P.I.D. 209 rue de l'Université**
**F-75007 Paris (FR)**

Courier Press, Leamington Spa, England.

## Description

La présente invention concerne un système radar à monoimpulsion à onde continue modulée linéairement en fréquence, comme défini au préambule de la revendication 1.

L'invention trouve sa meilleure application dans un matériel de radar simplifié, de préférence aéroporté et qui doit présenter des qualités de robustesse, faible encombrement et faible coût. Il s'agit notamment de matériel radar pour missile.

Des radars à monoimpulsion FM—CW sont connus et décrits par exemple dans l'ouvrage Radar Handbook, Skolnik, publié par McGraw-Hill Book Company, édition 1970, pages 21—10 à 21—30. Ces radars fonctionnent avec une seule impulsion émise soit dans deux plans orthogonaux soit dans un seul plan (en gisement par exemple). Pour ne pas compliquer l'exposé, on se limite à ce dernier cas dans la suite du texte. Par principe, un radar monopulse FM—CW possède deux fonctions: une détection angulaire et une détection en distance et/ou en vitesse. La détection angulaire est obtenue en comparant la phase des signaux reçus sur les antennes (on se limite à deux antennes réceptrices). Si deux antennes $R_1$ et $R_2$ distantes de d reçoivent un signal provenant de la direction qui fait un angle $\phi$ avec l'axe de la base d'antennes réceptrices $R_1$ et $R_2$, le déphasage $\varphi$ entre les signaux reçus respectivement par les antennes $R_1$ et $R_2$ s'exprime par:

$$\varphi = 2\Pi \frac{d}{\lambda} \sin \phi \qquad (1)$$

$\lambda$ étant la longueur d'onde de l'onde rayonnée.

Si on suppose les diagrammes d'antenne identiques, on constate que les deux champs $E_1$ et $E_2$ reçus en écho d'une cible sont égaux et en phase pour $\phi = 0$. On peut donc asservir l'ensemble $R_1$, $R_2$ en position par l'intermédiaire de la valeur de la différence des deux champs reçus normalisés par rapport à leur somme. Par exemple:

$$E_1 = Eo \cos (\omega t - \varphi/2) \qquad (2)$$

$$E_2 = Eo \cos (\omega t + \varphi/2) \qquad (3)$$

$$\frac{E_2 - E_1}{E_2 + E_1} = \frac{- 2Eo \sin \omega t \sin \varphi/2}{2 Eo \cos \omega t \cos \varphi/2} = - \frac{\sin \omega t \sin \varphi/2}{\cos \omega t \cos \varphi/2} \qquad (4), (5)$$

soit en amplitude (à une quadrature près):

$$\frac{|E_2 - E_1|}{|E_2 + E_1|} = tg \, \varphi/2 \qquad (6)$$

En pratique, les radars au type précité permettent d'obtenir, à partir de la somme et de la différence de signaux de battement soustractifs, et au moyen notamment de démodulateurs synchrones, un terme de la forme: k sin $\phi$ où k est une constante qui peut être déterminée.

La comparaison des phases est donc le paramètre qui définit la précision angulaire du système. Cette comparaison peut être réalisée directement en hyperfréquence ce qui impose un très bon contrôle des phases de tous les éléments situés avant l'étage différentiel (TOS des jonctions et des antennes). Le matériel simplifié que vise l'invention ne comporte en principe pas des éléments travaillant en hyperfréquence aussi précis et élaborés. Cette comparaison peut aussi être réalisée après les changements de fréquence, ce qui est le cas pour les radars auxquels s'applique l'invention. On a alors en plus des erreurs de phase introduites par l'étage d'entrée en hyperfréquence des erreurs de phase dues aux amplificateurs et aux mélangeurs.

D'autre part, la détection de distance est obtenue en obervant le signal de corrélation entre émission et réception. Par exemple dans le cas d'une émission à modulation linéaire de fréquence d'excursion F pendant le temps T, le signal à la réception est retardé de la valeur:

$$\tau = 2D/c \qquad (7)$$

c étant la vitesse de l'onde électromagnétique et D la distance de la cible, et décalé de l'effet Doppler caractérisé par la fréquence de battement:

$$f_d = 2 \, v/\lambda \qquad (8)$$

2

où v est la vitesse relative par rapport à la cible ou vitesse Doppler. Dans ces conditions, le signal de battement soustractif utile a une fréquence $f_b$ telle que:

$$f_b = \frac{\Delta F}{T} \tau - f_d \qquad (9)$$

Par un traitement particulier connu du signal de battement, la valeur de $f_d$ peut être isolée, ce qui permet de connaître la valeur v et par ailleurs, l'application des formules (7) et (9) permet la détermination de D. Cet exemple très simplifié indique que le rôle de porte en distance est rempli par l'équivalent d'un filtre en fréquence. Bien entendu, dans le cas réel d'un radar les périodes de réception sont en général distinctes des périodes d'emission pour éviter les phénomènes de saturation du récepteur. Un oscillateur local remplit alors le rôle de signal de référence mais le fonctionnement est comparable.

Le document FR—A 2 041 178 divulgue un système radar ayant des caractéristiques correspondant au premier paragraphe de la description. Dans ce radar, la correction des erreurs de phase, qui est séquentielle, est effectuée sur les guides d'ondes d'arrivée aux antennes et les erreurs de phase qui interviennent au delà, c'est-à-dire dans la zone de rayonnement, ne sont pas corrigées; par ailleurs, les trous de couplage eux-mêmes peuvent introduire des erreurs de couplage et donc de phase qui leur sont propres.

On connaît aussi du document FR—A—2 158 080 un radar en impulsion qui n'est donc pas du type FM—CW et pour lequel il ne serait pas possible de placer l'antenne simulée sur le même support que celui du radar à cause de son principe de fonctionnement particulier.

Des radars de très faible encombrement destinés à des fusées de proximité ou à des autodirecteurs doivent rester simples et sans réglages critiques. Dans le cas de radars FM—CW tels qu'indiqués ci-dessus, le contrôle de l'identité des phases à la fabrication et dans le temps est critique. L'invention se propose de corriger les erreurs de phase qui interviennent aussi beien au niveau des éléments hyperfréquence du radar qu'au niveau des éléments fonctionnant en fréquence intermédiaire.

Ce but est atteint et les inconvénients de l'art antérieur sont atténués grâce à un système radar défini par la revendication 1.

Un premier mode de réalisation de l'invention est remarquable en ce que la deuxième antenne d'émission est solidaire de ladite base d'antennes et équidistante desdites antennes réceptrices et que lesdites moyens de correction consistent en un asservissement de la (des) phase(s) d'au moins un desdits signaux de battement soustractifs, ledit asservissement étant apte à annuler en première approximation lesdites erreurs de phase et comportant à cet effet un système en boucle constitué par au moins un déphaseur situé dans une chaîne de traitement d'un signal de battement soustractif, un organe de mesure du déphasage résiduel reltif à la cible simulée entre ladite chaîne et une chaîne homologue et un organe d'asservissement intégrateur dont la sortie commande ledit déphaseur.

Selon ce premier mode de réalisation la base d'antennes peut être montée fixe, sur l'engin mobile porteur, ou être solidaire d'une plate-forme embarquée à bord de ce dernier; les organes de mesure de déphasage sont de préférence distincts selon qu'il s'agit des signaux de battement soustractifs relatifs à la cible simulée ou à la cible vraie; les mesures de déphasage sont alors simultanées et les portes en distance pour la cible simulée et pour la cible vraie sont disjointes. Pentant la période d'utilisation du radar on connaît en général la position de la porte en distance de recherche ou d'accrochage de la cible ainsi que la gamme de vitesse probable (fréquence Doppler) de celle-ci. Il est donc facile de placer la fréquence du simulateur, c'est-à-dire la distance et/ou la vitesse simmulée en dehors de l'espace de surveillance de la cible. On peut donc en permanence asservir le déphasage pour conserver le déphasage zéro sur l'axe de la base d'antennes réceptrices défini seulement par une position géométrique.

Un deuxième mode de réalisation du système radar selon l'invention dans lequel la base d'antennes est solidaire d'un autodirecteur embarqué à bord d'un engin mobile est remarquable en ce que l'antenne d'émission simulée est montée sur l'engin mobile de façon telle que la droite qui relie la base d'antennes à l'antenne d'émission simulée soit sensiblement parallèle à l'axe de l'engin mobile et que les moyens de correction de phase consistent en de premiers moyens pour déterminer par rapport à l'axe de la base d'antennes un angle $\beta$ représentatif de la position de la cible simulée et des deuxièmes moyens pour soustraire ledit angle $\beta$ de l'ange $\varphi$ représentatif de la position de la cible vraie par rapport à l'axe de la base d'antennes, de façon à obtenir l'angel $\gamma$ représentatif de l'angle entre l'axe de l'engin mobile et la direction de ladite cible. Dans ce dernier cas une boucle d'asservissement de phase n'est plus nécessaire étant donné que l'angle cherché s'obtient par différence de deux angles mesurés et que les erreurs de phase, sensiblement les mêmes pour chacun des deux angles mesurés, s'annulent lors du calcul de leur différence.

Comme pour le premier mode de réalisation, les organes de mesure de déphasage sont de préférence distincts selon qu'il s'agit des signaux de battement soustractifs relatifs à la cible simulée ou à la cible vraie; les mesures de déphasage sont alors simultanées et les portes en distance pour la cible simulée et pour la cible vraie sont disjointes.

Pour les deux modes de réalisation une façon simple de réaliser un signal simulé est de moduler le signal émis par un multiple élevé de la fréquence de récurrence, ce qui peut être assimilé à un faux effet

EP 0 143 497 B1

Doppler, ce procédé étant habituellement employé pour réaliser des simulateurs. De préférence, le modulateur utilisé est un modulateur à bande latérale unique. Les déphasages dus aux erreurs de phase internes au système apparaissent pour les signaux de battement dus à la cible simulée avec le même valeur que pour les signaux de battement dus à la cible vraie. L'idée de départ de l'invention est d'évaluer de façon instantanée le déphasage global parasite qui peut être connu du fait que la direction d'émission de la cible simulée est elle-même connue et de retrancher la valeur de ce déphasage de celle obtenue pour la cible vraie dont on cherche à connaître la position.

La description qui suit en regard des dessins annexés, le tout donné à titre d'exemple fera bien comprendre comment l'invention peut être réalisée.

La figure 1 représente sous forme synoptique le système d'antennes du radar selon l'invention et son alimentation.

La figure 2 est un schéma synoptique théorique de la partie de traitement du signal pour le premier mode de réalisation de l'invention.

La figure 3 est un schéma synoptique pratique analogue à celui de la figure 2, pour le premier mode de réalisation.

Les figures 4a, 4b, 4c représentent trois implantations possibles du système d'antennes sur l'aéronef.

Las figure 5 est un schéma synoptique analogue à celui de la figure 3 pour le deuxième mode de réalisation de l'invention.

Sur les figures, les mêmes références représentent les mêmes éléments avec les mêmes fonctions.

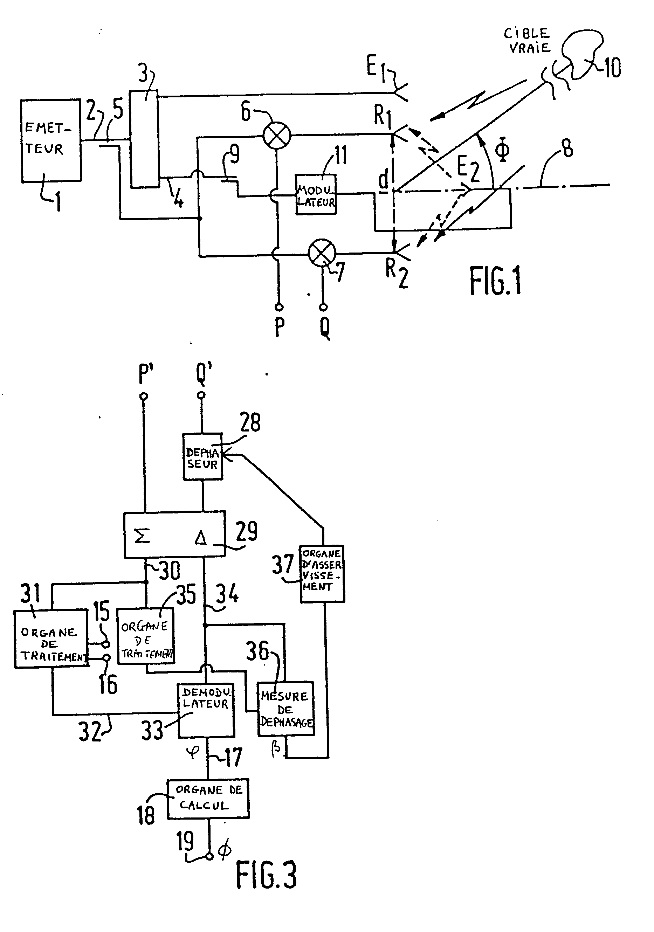

A la figure 1, un émetteur 1 FM—CW à monoimpulsion émet par l'intermédiaire d'une ligne hyperfréquence 2 et d'un organe de connexion 3 par l'antenne d'emission $E_1$. L'organe 3, qui possède une deuxième sortie en hyperfréquence 4, est une connexion en hyperfréquences qui transmet simultanément le signal d'emission sur l'antenne $E_1$ ou sur la ligne 4. Le signal d'émission est prélevé sur la ligne 2 par exemple au moyen d'un coupleur 5 relié à la première entrée d'un mélangeur 6 et d'un mélangeur 7 dont une deuxième entrée est reliée à une antenne réceptrice $R_1$, respectivement $R_2$. Les antennes $R_1$ et $R_2$ sont séparées par la distance d, assez faible, et leur axe est référencé 8. Les sorties respectives des mélangeurs 6 et 7 sont reliées aux points P et Q. La structure qu'on vient de décrire, abstraction faite de l'organe 3, est sensiblement celle d'un système radar FM—CW embarqué classique, pouvant être monté sur un autodirecteur.

Selon l'invention, la ligne hyperfréquence 2 est aussi reliée à une deuxième antenne d'émission $E_2$, par l'intermédiaire de l'organe de connexion 3, de la ligne 4 d'un coupleur éventuel 9 et d'un modulateur 11. Les commutations éventuelles du signal d'émission et les affaiblissements des signaux symbolisés par les coupleurs 5 et 9 sont réglés en fonction de la distance de la cible suivant les règles habituelles pour éviter l'éblouissement de l'ensemble récepteur (antennes $R_1$, $R_2$ et mélangeurs 6, 7). Des signaux de réception, soit en provenance de l'antenne $E_1$ après réflexion sur une cible 10, soit en provenance directe de l'antenne $E_2$ sont captés par les antennes $R_1$ et $R_2$ qui définissent la base de mesure classique des radars à monoimpulsion. Le mélange du signal d'oscillation locale d'une part et des signaux reçus par les antennes $R_1$ et $R_2$ respectivement dans les mélangeurs 6 et 7 produit des signaux de battement soustractif à basse fréquence aux points P et Q. En parallèle sur le signal d'oscillation locale, le signal d'émission est prélevé et traverse le modulateur 11 simulant un faux écho à une distance et/ou à une vitesse différente de celle de la cible 10. Ce signal est rayonné avec un retard négligeable par le cornet de référence de phase de l'antenne $E_2$ situé par exemple sur le plan médiateur des centres de phase des antennes de réception $R_1$ et $R_2$, c'est-à-dire sur l'axe 8 à la figure 1. L'organe 3 étant une simple connexion, l'atténuation du signal sur l'antenne $E_2$ est de préférence assez marquée et de l'ordre de 50 dB environ. A titre comparatif, le signal d'écho reçu en provenance de la cible vraie 10 est atténué de 80 dB environ. Moyennant ces précautions, les signaux de battement soustractif aux points P et Q sont exploitables et peuvent être traités comme décrit ci-dessous. Le modulateur 11 peut être constitué par une ligane à retard, ce qui a pour avantage de fournir un signal d'emission simulée qui s'apparente de très près à un véritable signal d'écho sur une cible vraie, mais comme inconvénient d'être un solution compliquée, car lourde, chère et à fortes pertes. Il n'est en fait pas nécessaire de fournir un signal aussi élaboré. En pratique, le modulateur 11 a pour fonction d'introduire une modulation de fréquence parasite qui puisse être interprétée comme un retard, c'est-à-dire que le signal émis en $E_2$ peut ne pas être épuré et comporter plusieurs raies dans son spectre pourvu que la partie du système qui se trouve en aval des antennes $R_1$, $R_2$ se comporte comme un filtre et soit à même de sélectionner la bonne raie dans le spectre du signal simulé. Cette fonction est facile à réaliser dans un radar un type considéré car elle s'identifie avec celle de porte en distance. Par exemple, le modulateur 11 opère un décalage de fréquence au moyen d'un modulateur à bande latérale unique, mais il est aussi possible que le modulateur 11 effectue un simple découpage du signal d'émission en provenance de l'emetteur 1. On obtient alors en sortie de 11 un signal à trois raies (deux bandes latérales et porteuse) et c'est la bande latérale inférieure qui est prise en compte par le reste du système. L'homme du métier sait adapter le système pour que cette prise en compte soit effectuée sans ambiguïté.

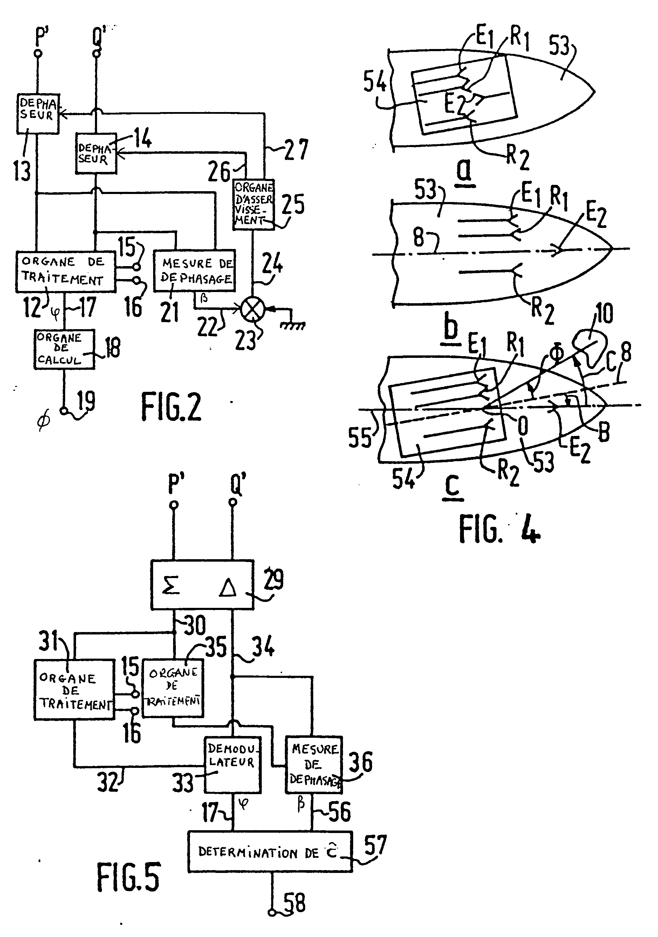

La partie de traitement du signal représentée à la figure 2 comporte une partie connue et une partie conforme à l'invention. La partie connue est constituée par un organe de traitement 12 classique dans tout radar à monoimpulsion. L'organe 12 reçoit les signaux de battement en provenance des mélangeurs 6 et 7, les points P' et Q' étant supposés reliés aux points P et Q, et des organes 13 et 14 disposés dans les voies des signaux de battement étant supposés absents pour l'instant. Dans l'organe 12 sont effectuées la

4

somme et la différence des signaux de battement reçus et déterminées la distance D de la cible et la vitesse doppler v qui apparaissent sous forme die signaux électriques sur des sorties 15 et 16 respectivement. Sur une troisième sortie 17 apparaît une fonction, en général trigonométrique, de l'angle φ défini ci-dessus, représentatif de l'angle φ qui caractérise la position de la cible. Dans l'organe 18 suité en aval est effectué de calcul de φ et le calcul de φ en fonction de φ par exemple à partir de la formule (1) ci-dessus et l'angle φ apparaît sous forme d'un signal électrique sur la borne de sortie 19. En l'absence des organes 13 et 14 qui sont des déphaseurs, l'angle φ et par suite l'angle φ sont entachés des erreurs de phase qui interviennent tout au long de la chaîne de traitement du système décrite ci-dessus. On se propose de corriger, au premier ordre, ces erreurs. Pour cela, le système comporte un deuxième organe de traitement de signal 21 disposé en parallèle par rapport à l'organe 12, qui sélectionne dans les signaux de battement, par un filtrage adapté, uniquement les composants relatives à la cible simulée et qui ne traite que les déphasages relatifs à ces composantes. La sortie unique 22 de l'organe 21, homologue de la sortie 17 de l'organe 12, est le siège d'un signal représentatif des erreurs de phase commises en amont par le système, à supposer que les déphaseurs 13 et 14 introduisent eux-mêmes un déphasage nul. Le signal sur la sortie 22 est exploité pour agir de façon continue sur les déphaseurs 13 et 14 de façon que ces derniers apportent un décalage de phase sensiblement égal et en sens contraire des erreurs de phase, ce qui revient à annuler le signal sur la sortie 22. L'organe 21 apparaît donc comme un organe de mesure de déphasage résiduel. La fonction qu'on vient de définir est réalisée de façon simple par une boucle d'asservissement: le signal de sortie en 22 est comparé à la valeur nulle dans un mélangeur 23 dont une autre entrée est reliée à la masse et dont la sortie 24 est reliée à un organe d'asservissement 25. L'organe 25 est pour l'essentiel un amplificateur-intégrateur et peut être constitué par exemple par un amplificateur différentiel monté en intégrateur. Les deux sorties de l'organe 25, reliées à l'entrée de commande des déphaseurs 13 et 14 respectivement, sont le siège de grandeurs électriques égales en valeur absolue et de signes contraires. Le résultat obtenu est de déphaser l'un des signaux de battement, par exemple au point P' d'un angle α/2 et l'autre signal de battement par exemple au point Q' de l'angle — α/2, l'angle α étant égal en première approximation à l'erreur de phase introduite par la partie du système représentée à la figure 1. On notera que le mélangeur 23 est représenté, sur la figure 2 uniquement à des fins didactiques. En effet, comme il s'agit en l'occurrence de comparer à zéro le signal sur le conducteur 22, les signaux sur les conducteurs 22 et 24 sont identiques et dans la pratique, le mélangeur 23 est inutile en n'est d'ailleurs pas représenté aux figures 3, 4 et 6. La plupart es erreurs de phase internes au système étant corrigées comme décrit ci-dessus pour le signal d'émission simulé elles le sont aussi pour le signal utile réfléchi par la cible vraie. Il s'ensuit que la valeur des angles φ et φ calculés dans l'organe 18 peut être connue avec une assez grande précision. On notera, en référence à la figure 2, que les organes de mesure de déphasage sont distincts selon qu'il s'agit de la cible vraie (organe 12) ou de la cible simulée (organe 21).

La figure 3 représente un mode de réalisation pratique analogue à celui de la figure 2. Un seul déphaseur 28 dans la voie de l'un des deux signaux de battement permet le rattrapage de phase de valeur α conforme à l'invention. Les deux signaux de battement en P' et Q' sont, après correction de phase, transmis à un organe de traitement 29 qui effectue la somme et la différence de ces signaux. Le signal somme est transmis par un conducteur 30 à un organe 31 qui détermine la distance D et la vitesse doppler v transmises sous forme électrique aux sorites 15 et 16 et qui épure le signal de somme au moyen de filtres appropriés pour ne conserver dans ce signal que les composantes relatives à la porte en distance à attribuer aux cibles vraies recherchées, puis le transmet à un conducteur de sortie 32. Le signal sur le conducteur 32 est fourni à l'entrée de référence d'un démodulateur synchrone 33 dont une deuxième entrée reçoit, par un conducteur 34 le signal de différence des signaux de battement issu de l'organe 29. Le signal en sortie du démodulateur 33, par exemple de la forme: k sin φ, est ensuite traité par l'organe 18, et la sortie 19 est le siège d'un signal électrique représentatif de l'angle φ. La partie de la figure 3 décrite ci-dessus est connue, mis à part le déphaseur 28. Selon l'invention, le signal de somme sur le conducteur 30 est aussi transmis à un organe 35 qui a pour fonction d'épurer le signal de somme au moyen de filtres appropriés différents de ceux de l'organe 31, pour ne conserver dans ce signal que les composantes relatives à la porte en distance pour la cible simulée. Pour obtenir une bonne séparation des signaux de somme épurés pour la cible vraie et pour la cible simulée il est nécessaire, dans ce mode de réalisation, de bien séparer le sportes en distance pour les cibles vraies et pour la cible simulée. Par exemple, si une cible vraie est attendue entre 100 et 200 km, le radar effectuant un balayage de 100 à 200 km, la distance de la cible simulée peut être fixée à une valeur inférieure à 100 km et par exemple égale à 50 km. Si une cible vraie est attendue entre 0 et 100 km, la distance de la cible simulée doit être supérieure à 100 km. On obtient donc en sortie de l'organe 35 un signal somme épuré pour la cible simulée qui est transmis à l'entrée de référence d'un deuxième démodulateur synchrone 36 dont une deuxième entrée est reliée au conducteur 34 qui porte le signal de différence des signaux de battement. Le signal de sortie du démodulateur 36, qui est assimilable au signal d'erreur de la boucle d'asservissement, est analogue aus signal sur le conducteur 22 de la figure 2. Ce signal d'erreur qu'on cherche à rendre le plus faible possible est transmis à l'organe d'asservissement intégrateur 37 dont la sortie commande le déphaseur 28. Le mode de réalisation de la figure 3 nécessite deux organes 31 et 35 de traitement du signal de somme et duex démodulateurs synchrones 33 et 36.

On a envisagé jusqu'ici le cas où l'antenne E₂ est équidistante des antennes R₁ et R₂. Ceci est illustré aux figures 4a et 4b où un aéronef ou plus généralement un engin mobile est référencé 53. Sur la figure 4a, la base d'antennes $E_1$, $E_2$, $R_1$, $R_2$ est représentée montée sur une plate-forme stabilisée 54 servant de référence angulaire en ce sens qu'elle permet de s'affranchir des mouvements en général errtiques rapides de l'engin 53. Sur la figure 4b, la base d'antennes est directement solidaire de l'engin 53 et son axe 8 est parallèle à celui de l'engin. Pour certaines applications, pour des missiles, en particulier, il peur être intéressant de placer les antennes $E_1$, $R_1$, $R_2$ sur une plateforme stabilisée et l'antenna $E_2$ sur le missile comme représenté à la figure 4c, l'antenna $E_2$ et le centre de pivotement O de la base d'antennes connue qui marque le minieu du segment reliant les antennes $R_1$ et $R_2$ étant situés dans la plan de la figure. L'antenne $E_2$ n'est alors en général plus équidistante des antennes $R_1$ et $R_2$ et on est amené à mesurer deux angles: l'angle B entre l'axe 8 et le plan médiateur 55 qui indique la position de la cible simulée et l'angle $\phi$ qui indique la position de la cible vraie. L'angel qui doit être déterminé, dans ce cas, est l'angle C qui correspond à la différence des valeurs algébriques des angles telles qu'indiquées sur la figure 4c. On remarque alors que les erreurs de phase d'origine électrique introduites dans le système, qui sont les mêmes pour la détermination de l'angle B et de l'angle $\phi$ se retranchent et donc s'annulent lors de la détermination de l'angle C. En toute rigueur, l'annulation due à la différence ne s'opère pas sur les angles B et $\phi$ eux-mêmes mais sur les angles de déphasage $\varphi$ pour l'angle $\phi$ et $\beta$ pour l'angle B qui les représentent dans le système de traitement. Cependant, en vertu de la formule (1) ci-dessus et étant donné qu'on a affaire à de petits angles pour lesquels le sinus peut être assimilé à la valeur de l'argument exprimée en radians, l'annulation de l'erreur angulaire recherchée rete vraie au premier ordre. Les considérations ci-dessus conduisent au mode de réalisation de la figure 5.

Sur la figure 5, il n'y a pas de déphaseur sur les voies des signaux de battement ni de boucle d'asservissement e phase. Quant au reste du système on retrouve les mêmes éléments 29, 31, 33, 35, 36 qu'à la figure 3, avec les mêmes connextions entre eux. Les conducteurs de sortie respectifs 17 et 56 des démodulateurs synchrones 33 et 36 sont reliés à deux entrées d'un organe 57 qui a pour fonction de déterminer l'angle C. Les conducteurs 17 et 56 portent des signaux qui sont respectivement de la forme : k $\sin \varphi$ et k' $\sin \beta$, les angles $\varphi$ et $\beta$ incorporant dans ce cas les erreurs de phase dues au traitement du signal et les valeurs de constantes k et k' pouvant être connues de façon classique. L'organe 57 détermine en premier lieu les valeurs respectives de $\varphi$ et de $\beta$ puis la formule (1) simplifiée peut être appliquée, soit:

$$\varphi \cong 2\pi \frac{d}{\lambda} \phi \qquad (10)$$

$$\beta \cong 2\pi \frac{d}{\lambda} B \qquad (11)$$

$$|\gamma| = |\varphi - \beta| \cong 2\pi \frac{d}{\lambda} |\phi - B| \qquad (12)$$

$$|\gamma| \cong 2\pi \frac{d}{\lambda} |C| \qquad (13)$$

d'où l'on déduit la valeur absolue de l'angle C:

$$|C| \cong \frac{\lambda}{2\pi d} |\gamma| \qquad (14)$$

La valeur $|C|$ débarrassée des erreurs de phase dues au traitement peut ainsi être fournie sous forme d'une grandeur électrique à la sortie 58 du système de traitement.

Les avantages de l'invention, liés à ses applications peuvent être résumés comme suit : lorsque l'antenne de simulation $E_2$ ets solidaire du groupe d'antennes de réception (figures 4a et 4b), le systéme est analogue à un radar à monoimpulsion classique mais la dérive de l'axe est réduite. Lorsque l'antenne de simulation est solidaire par exemple d'un radome de missile (figures 4b et 4c), la différence entre la valeur de déphasge relevée sur le signal de l'antenne de simulation et sur celui de la cible vraie donne la position de celle-ci par rapport au missile, sous réserve que le diagramme de rayonnement soit assez large. Cette dernière possibilité peut être intéressante lorsque la vitesse du missile est grande devant la vitesse transversale des cibles : l'angle de débattement de l'autodirecteur est alors inférieur à la largeur du diagramme d'antenne d'une part et l'axe du missile est pratiquement confondu avec la trajectoire du missile d'autre part. Le déphasage mesuré entre le signal de cible et le signal simulé peut alors permettre la suppression de la plate-forme stabilisée servant de référence, ce qui correspond au passage du dispositif de la figure 4c à celui de la figure 4b. Ce dispositif simplifié peut s'appliquer notamment à un autodirecteur anti-navire à faible coût.

**Revendications**

1. Système radar à monoimpulsion à onde continue modulée linéairement en fréquence (FM—CW), fixé à un engin porteur (53) comportant un émétteur (1), une base d'antennes ayant une première antenne émettrice (E₁) et au moins deux antennes réceptrices (R₁, R₂), des mélangeurs (6, 7) qui fournissent des signaux de battement soustractif entre le signal émis et chaque signal d'écho reçu sur chaque antenne réceptrice (R₁, R₂) après réflexion sur une cible vraie (10) et des premiers moyens de traitement desdits signaux de battement pour effectuer une détection de la position angulaire φ ainsi qu'une détection de la distance e/ou de la vitesse de ladite cible (10) à l'intérieur d'une porte en distance de largeur prédéterminée, ledit systéme comportant en outre un simulateur de cible destiné à corriger les erreurs de phase qui interviennent dans ledit système radar et qui faussent la détermination de la position angulaire de ladite cible, ledit simulateur comportant à cet effet une chaîne d'émission (4, 9, 11, E₂) pouvant être reliée audit émetteur, ainsi que des deuxièmes moyens de traitement du signal de battement sigmulé (21; 29, 35, 36) pour effectuer une détection angulaire de la cible simulée et des moyens de correction (23, 25, 13, 14 ; 37, 28) desdites erreurs de phase détectées sur la cible simulée, système radar caractérisé en ce que ledit simulateur fait partie intégrante dudit système radar en ce sens qu'il est monté sur ledit engin porteur, qui ladite chaîne d'émission est constituée d'une part par un modulateur (11) convenant pour une émission FM—CW et ayant pour fonction d'introduire une modulation de fréquence parasite qui puisse être interprétée comme un retard assimilable à une porte en distance, d'autre part par une deuxième antenne d'émission (E₂) qui émet en même temps que ladite première antenne émettrice (E₁) vers lesdites antennes réceptrices (R₁, R₂) et dont la position géométrique est connue par construction ou par mesure, et que lesdites deuxièmes moyens de traitement du signal de battement simulé comportent au moins un organe de mesure de déphasage (21, 36), de façon que lesdites erreurs de phase soient corrigées intégralement et simplement par suppression de l'inexactitude sur la position de l'axe électrique (8) de ladite base d'antennes, lesdits moyens de correction agissant dans la voie de signal commune à la cible vraie et à la cible simulée (13, 14 ; 28).

2. Système radar selon la revendication 1, caractérisé en ce que ladite base d'antennes est solidaire d'une plateforme stabilisée (54) embarquée à bord d'un engin mobile (53).

3. Système radar selon la revendication 1 ou 2, caractérisé en ce que ladite deuxième antenne d'émission (E₂) est solidaire de ladite base d'antennes et équidistante desdites antennes réceptrices (Fig. 4a, 4b) et que lesdites moyens de correction consistent en un asservissement de la (des) phase(s) d'au moins un desdits signaux de battement soustractifs, ledit asservissement étant apte à annuler en première approximation lesdites erreurs de phase et comportant à cet effet un système en boucle constitué par au moins un déphaseur (13, 14 ; 28) situé dans une chaîne de traitement d'un signal de battement soustractif, un organe de mesure du déphasage résiduel (21 ; 36) relatif à la cible simulée entre ladite chaîne et une chaîne homologue et un organe d'asservissement intégrateur (25 ; 37) dont la sortie commande ledit déphaseur.

4. Système radar selon la revendication 1 ou 3, caractérisé en ce que ladite base d'antennes est solidaire d'un engin mobile étant montée rigide sur ce dernier et son axe étant parallèle à celui de l'engin mobile (Fig. 4b).

5. Système radar selon la revendication 2, caractérisé en ce que ladite deuxième antenne d'émission est montée sur l'engin mobile de façon telle que la droite qui relie le centre de pivotement (O) de ladite base d'antennes à ladite deuxième antenne d'émission soit parallèle à l'axe de l'engin mobile (55) et que lesdits moyens de correction de phase consistent en des premiers moyens (36) pour déterminer par rapport à l'axe (8) de la base d'antennes un angle β représentatif de la position de la cible simulée et des deuxièmes moyens pour soustraire ledit angle β de l'angle φ représentatif de la position de la cible vraie (10) par rapport à l'axe de la base d'antennes (8), de façon à obtenir l'angle γ représentatif de l'angle centre l'axe de l'engin mobile (55) et la direction de ladite cible vraie (10).

6. Système radar selon l'une des revendications 1 à 5, caractérisé en ce que les organes de mesure de déphasage (21, 12 ; 36, 33) sont distincts selon qu'il s'agit des signaux de battement soustractif relatifs à la cible simulée ou à la cible vraie, que les mesures de déphasage sont simultanées et que les portes en distance pour la cible simulée et pour la cible vraie sont disjointes.

7. Système radar selon l'une des revendications 1 à 6, caractérisé en ce que ledit modulateur (11) est un modulateur à bande latérale unique.

**Patentansprüche**

1. Monopulsradarsystem mit linear frequenzmodulierten ungedämpften Wellen (FM—CW), befestigt an einem Träger (53) mit einem Sender (1), einem Sockel dür Antennen mit einer ersten Sendeantenne (E₁) und mindestens zwei Empfangsantennen (R₁, R₂), Mischstufen (6, 7), die Schwebedifferenzsignale liefern durch Subtraktion zwischen dem ausgesendeten Signal und jedem nach Reflexion an einem richtigen Ziel (10) an jeder Empfangsantenne (R₁, R₂) empfangenen Echosignal, und ersten Elementen zum Verarbeiten der Schwebedifferenzsignale zum Erhalten einer Detektion der Richtung φ des Ziels (10), sowie einer Detektion des Abstandes und/oder der Geschwindigkeit des Ziels (10) innerhalb eines Abstandsfensters vorbestimmter Breite, wobei das System außerdem mit einem Zielsimulator versehen ist, der dazu gemeint ist, die in dem Radarsystem auftretenden und die Richtungsbestimmung des Ziels Verfälschenden Phasenfehler zu korrigieren, wobei dieser Simulator dazu mit einem an den Sender anschließbaren Sendekries (4, 9, 11, E₂) versehen ist, sowie mit zweiten Elementen (21; 29, 35, 36) zum Verarbeiten des

simulierten Schwebedifferenzsignals zum Erhalten einer Richtungsdetektion des simulierten Zeils und Korrekturelementen (23, 25, 13, 14; 37, 28) für die an dem simulierten Ziel detektierten Phasenfehler, wobei das Radarsystem dadurch gekennzeichnet, ist, daß der Simulator einen integrierten Teil des Radarsystems bildet in dem Sinn, daß er in dem Träger angeordnet ist, daß der Sendekries einerseits aus einem für eine FM—CW-Sendung geeigneten Modulator (11) besteht, mit der Aufgabe eine störende Frequenzmodulation einzuführen, die als eine mit dem Abstandsfenster vergleichbare Verzögerung betrachtet werden kann, und andererseits aus einer zweiten Sendeantenne (E$_2$) die in derselben Zeit wie die erste Sendeantenne (E$_1$) zu den Empfangsantennen (R$_1$, R$_2$) sendet und deren geometrische Lage durch Konstruktion oder durch Messung bekannt ist, und daß die zweiten Elemente zum Verarbeiten des simulierten Schwebedifferenzsignals mit mindestens einem Messgerät (21, 36) zum Messen der Phasendifferenz versehen sind, so daß die Phasenfehler auf einfache Weise völlig dadurch korrigiert werden, daß die Ungenauigkeit in der Lage der elektrischen Achse (8) des Antennensockels aufgehoben wird, wobei die Korrekturelemente in demjenigen Signalkanal arbeiten, der für das richtige Ziel und das simulierte Ziel (13, 14; 28) gemeinsam ist.

2. Radarsystem nach Anspruch 1, dadurch gekennzeichnet, daß der Antennensockel mit einer stabilisierten Plattform (54) an Bord eines mobilen Trägers (53) ein Ganzes bildet.

3. Radarsystem nach Anspruch 1 oder 2, dadurch gekennzeichnet, daß die zweite Sende antenne (E$_2$) ein Ganzes mit dem Antennensockel bildet und in demselben Abstand von den Empfangsantennen (Fig. 4a, 4b) steht, und daß die Korrekturelemente aus Regelmitteln zur automatischen Regelung der Phase oder der Phasen mindestens eines der Schwebedifferenzsignale bestehen, wobei die Regelmittel in erster Annäherung imstande sind, die Phasenfehler zu korrigieren und dazu mit einem Schleifensystem versehen sind, das aus mindestens einem Phasenschieber (13, 14; 28) besteht, der in einem Verarbeitungskreis eines Schwebediffernzsignals vorgesehen ist, weiterhin mit einem Element (21, 36) zum Messen der restlichen Phasendifferenz gegenüber dem simulierten Ziel zwischen dem Kreis und einem gelichwertigen Kreis, sowie mit einem integrierenden Regelelement (25; 37) dessen Ausgang den Phasenschieber steuert.

4. Radarsystem nach Anspruch 1 oder 3, dadurch gekennzeichnet, daß der Antennensockel mit einem mobilen Träger en Ganzes bildet, indem er an der letztgenannten befestigt ist, wobei seine Achse sich parallel zu dem Träger erstreckt (Fig. 4b).

5. Radarsystem nach Anspruch 2, dadurch gekennzeichnet, daß die zweite Sendeantenne derart in dem Träger angeordnet ist, daß die gerade Linie, die den Drehpunkt (O) des Antennensockels mit der zweiten Antenne verbindet, sich parallel zu der Achse des Trägers (55) erstreckt, und daß die Phasenkorrekturelemente aus ersten Elementen (36) bestehen zum gegenüber der Achse (8) des Antennensockels Ermitteln des Winkels β, der die Richtung des simulierten Ziels darstellt, und zweiten Elementen zum Subtrahieren des Winkels β von dem Winkel φ, der die Richtung des richtigen ziels (10) gegenüber der Achse (8) des Antennensockels darstellt, damit auf diese Weise der Winkel γ erhalten wird, der den Winkel C zwischen der Achse des Trägers (55) und der Richtung des richtigen Ziels (10) darstellt.

6. Radarsystem nach einem der Ansprüche 1 bis 5, dadurch gekennzeichnet, daß es einzelne Messgeräte (21, 12; 36, 33) zum Messen der Phasendifferenz gibt, je nach Schwebedifferenzsignal in bezug auf das simulierte Ziel oder das richtige Ziel, daß die Phasendifferenzmessungen geichzeitig sind, und daß die Abstandsfenster für das simulierte Ziel und für das richtige Ziel getrennt sind.

7. Radarsystem nach einem der Ansprüche 1 bis 6, dadurch gekennzeichnet, daß der Modulator (11) ein Einseitenbandmodulator ist.

## Claims

1. This invention relates to a monopulse linearly frequency modulated continuous wave (FM—CW) radar, fixed to a carrier missile (53) comprising a transmitter (1), an antenna array having a first transmitting antenna (E$_1$) and at least two receiving antennas (R$_1$, R$_2$), mixers (6, 7) producing subtractive beat signals between the transmitted signal and each echo signal received on each receiving antenna (R$_1$, R$_2$) after reflection on a real target (10) and first processing means for said heat signals to perform a detection of the angular position φ as well as a detection of the range and/or the speed of said target (10) within a range window of predetermined width, said system further including a target simulator intended to correct the phase errors occuring in said radar system and requiring the determination of the angular position of said target, said simulator comprising thereto a transmission circuit (4, 9, 11, E$_2$) which can be connected to this transmitter, as well as second processing means for the simulated beat signal (21, 29, 35, 36) in order to perform an angular detection of the simulated target and correction means (23, 25, 13, 14; 37, 28) for correcting these detected phase errors on the simulated target, the system being characterised in that said simulator forms an integrating part of said radar system in the way that it is installed on said carrier missile, in that said transmission circuit is constituted partly by a modulator (11) suitable for an FM—CW transmission and having as its function to introduce a parasitic frequency modulation that may be interpreted as a delay which may be compared to a range window, and also by a second transmitting antenna (E$_2$) which transmits at the same time as said first transmitting antenna (E$_1$) to said receiving antennas (R$_1$, R$_2$) and whose geometrical position is known by construction or by measurement, and in that said second processing means of the simulated beat signal comprise at least a phase shift measuring unit (21, 36), in a manner such that said phase errors are simply and completely corrected by suppressing the inexactness of the position of the electric axis (8) of said antenna array, said correction means operating on the signal channel common to the true and simulated targets (13, 14; 28).

2. Radar system as claimed in claim 1, characterised in that said antenna array forms an integral part of the stabilized platform (54) on board of a mobile missile (53).

3. Radar system as claimed in claim 1 or 2, characterised in that said second transmitting antenna ($E_2$) forms an integral part of said antenna array and is equidistant from said receiving antennas (Figs. 4a, 4b) and in that said correction means consist of a phase controller for at least one of said subtractive beat signals, said controller being suitable for eliminating in the first approximation said phase errors and thereto comprising a loop system constituted by at least a phase shifter (13, 14; 28) situated in a processing chain of a subtractive beat signal, a measuring element for measuring the residual phase shift (21; 36) with respect to the simulated target between said chain and a similar chain and an integrated control unit (25; 37) which controls said phase shifter.

4. Radar system as claimed in any one of the claims 2 to 5, characterised in that said array of antennas is an integral part of a mobile missile and is mounted rigidly on this missile and has its axis in parallel with the axis of the mobile missile (see Fig. 4b).

5. Radar system as claimed in claim 2, characterised in that said second transmitting antenna is mounted on a mobile missile in a manner such that the straight line connecting the pivoting centre (O) of said antenna array to said second transmitting antenna is parallel with the axis of the mobile missile (55) and in that said phase correction means consist of first means (36) for determining, relative to the axis (8) of the antenna array, and angle $\beta$ representing the position of the simulated target and second means for subtracting said angle $\beta$ from the angle $\varphi$ representing the position of the true target (10) relative to the axis of the antenna array (8), in order to obtain the angle $\gamma$ representing angle C between the axis of the mobile missile (55) and the direction of said true target (10).

6. Radar system as claimed in claims 1 to 5, characterised in that the phase shift measuring devices (21, 12; 36, 33) are separate devices depending on whether substractive beat signals relative to the simulated target or the true target are concerned, in that the phase shift measurements are effected simultaneously and in that the range gates for the simulated and true targets are separate.

7. Radar system as claimed in claims 1 to 6, characterised in that said modulator (11) is a single sideband modulator.

FIG.1

FIG.3

FIG.2

FIG.4

FIG.5